# EUROPÄISCHE PATENTSCHRIFT

(11) **EP 1 144 219 B1**
(45) Veröffentlichungstag und Bekanntmachung des Hinweises auf die Patenterteilung: **27.11.2002**
(21) Anmeldenummer: 99972984.1
(22) Anmeldetag: 18.09.1999
(51) Int. Cl.: B60N 2/22

(54) **STELLEINRICHTUNG, INSBESONDERE ZUR VERSTELLUNG EINES KRAFTFAHRZEUGSITZES**
ADJUSTMENT DEVICE, ESPECIALLY FOR ADJUSTING A SEAT IN A MOTOR VEHICLE
DISPOSITIF DE REGLAGE PERMETTANT NOTAMMENT DE REGLER UN SIEGE DE VEHICULE

(30) Priorität: 27.11.1998 DE 19854931
(43) Veröffentlichungstag der Anmeldung: 17.10.2001
(73) Patentinhaber: INA-Schaeffler KG, 91074 Herzogenaurach (DE)
(72) Erfinder: HOCHMUTH, Harald, D-91469 Hagenbüchach (DE)
(86) Internationale Anmeldenummer: EP9906934
(87) Internationale Veröffentlichungsnummer: WO00032440

(56) Entgegenhaltungen:
- EP-A- 0 071 501
- EP-A- 0 370 502
- EP-A- 0 631 901
- EP-A- 0 751 030
- DE-A- 3 734 363
- DE-B- 1 106 138
- US-A- 2 209 122
- US-A- 3 243 023
- US-A- 3 319 747
- US-A- 3 648 813

## Beschreibung

Die vorliegende Erfindung betrifft eine Stelleinrichtung zur Durchführung einer Verstellfunktion. Derartige Stelleinrichtungen werden beispielsweise als Sitzverstelleinrichtungen in Kraftfahrzeugen eingesetzt. Die vorliegende Erfindung betrifft insbesondere solche Stelleinrichtungen, bei denen ein Klemmrollenschaltwerk und ein schaltbares Klemmrollengesperre miteinander gekoppelt sind (es wird aüf die europäische Patentanmelding 99 973 105-2 des Anmelden verweisen).

Das Klemmrollenschaltwerk ist ein stufenlos arbeitendes Schrittschaltwerk, mit dem eine Verstellung beispielsweise des Kraftfahrzeugsitzes bewerkstelligt werden kann. Ein Antriebselement und ein Abtriebselement begrenzen gemeinsam mit einander zugewandten Klemmflächen sich in entgegengesetzten Richtungen verjüngende, keilförmige Klemmspalten, in denen Klemmrollen angeordnet sind. Gestellfeste Anschläge sind vorgesehen, die - wenn das Antriebselement des Klemmrollenschaltwerks nicht betätigt wird - die Klemmrollen außer Klemmeingriff mit den Klemmflächen halten. Auf diese Weise ist sichergestellt, daß das Abtriebselement in einer ruhenden bzw. in einer Ausgangsstellung des Antriebselementes drehbar ist. Wird das Antriebselement aus seiner Ausgangsstellung bzw. aus seiner Ruhelage ausgelenkt, verrichtet das Antriebselement einen Arbeitshub. Die Rückbewegung des Antriebselementes in die Ausgangsstellung ist ein Leerhub, bei dem das Abtriebselement nicht betätigt wird. Beim Arbeitshub des Antriebselementes in der einen Richtung werden die einen Klemmrollen in Klemmeingriff mit den Klemmflächen gebracht, wobei die jeweils anderen Klemmrollen gestellfest abgestützt und außer Klemmeingriff mit den Klemmflächen bleiben. Während des Leerhubs sind die zuvor eingeklemmten Klemmrollen wegen der Bewegungsumkehr außer Klemmeingriff mit den Klemmflächen, die anderen Klemmrollen bleiben auch während des Leerhubs an dem gestellfesten Anschlag abgestützt und außer Klemmeingriff mit den Klemmflächen. Deshalb erfolgt keine Mitnahme des Abtriebselementes während des Leerhubs.

Das schaltbare Klemmrollengesperre ist derart mit dem Abtriebselement des Klemmrollenschaltwerks verbunden, daß eine Drehbewegung des Abtriebselementes des Klemmrollenschaltwerks eine Mitnahme der Abtriebswelle des schaltbaren Klemmrollengesperres bewirkt. Wird das Klemmrollenschaltwerk nicht betätigt, sorgt das schaltbare Klemmrollengesperre dafür, daß ein von außen in die Abtriebswelle des Klemmgesperres eingeleitetes Drehmoment in ein Gehäuse, vorzugsweise ein gestellfestes Gehäuse eingeleitet wird. Dies ist möglich, da zwischen der Abtriebswelle des Klemmrollengesperres und dem Gehäuse angeordnete Klemmrollen in beiden Drehrichtungen in Klemmbereitschaft mit ihren Klemmflächen stehen. Die Klemmflächen sind an dem Gehäuse und an der Abtriebswelle vorgesehen und begrenzen Klemmspalten für die Klemmrollen. Im Fall des Kraftfahrzeugsitzes erzeugt das Gewicht des Sitzes bzw. Federkräfte und/oder die Gewichtskraft einer Person das an der Abtriebswelle von außen angreifende Drehmoment. Das schaltbare Klemmrollengesperre verhindert also, daß die Sitzhöhe ungewollt verändert wird.

### Hintergrund der Erfindung

Aus der EP 0 631 901 B1, die dem Oberbegriff des Anspruchs 1 entspricht, ist beispielsweise eine Verstellvorrichtung, insbesondere für einen Kraftfahrzeugsitz bekannt geworden. Unter anderem wird eine Verstellvorrichtung vorgeschlagen, bei der ein Klemmrollenschaltwerk (Figuren 2 und 3 der EP 0 631 901 B1) und ein schaltbares Klemmrollengesperre (Figur 13 der EP 0 631 901 B1) miteinander gekoppelt sind. Ein Schwenkhebel des Klemmrollenschaltwerks weist eine im wesentlichen kreisrunde Ausnehmung auf, in die ein Innenteil eingreift. In dem von dem Innenteil und der Wand der Ausnehmung begrenzten Ringraum sind mehrere über den Umfang verteilt angeordnete Klemmrollen angeordnet, die gegen gestellfeste Anschläge angefedert sind. Durch eine entsprechende Formgebung der Ausnehmung sind mehrere über den Umfang verteilt angeordnete radiale Einschnürungen des Ringraums ausgebildet, wobei die Wand der Ausnehmung und die Mantelfläche des Innenteils keilförmige Klemmspalten begrenzen, in denen die Klemmrollen angeordnet sind. Das Innenteil ist drehfest mit Mitnehmern verbunden, die zwischen Klemmrollen des schaltbaren Klemmrollengesperres eingreifen, wie weiter unten näher erläutert wird.

Die gestellfesten Anschläge für die Klemmrollen des Klemmrollenschaltwerks sorgen zunächst dafür, daß die Klemmrollen des Klemmrollenschaltwerks außer Klemmeingriff mit ihren Klemmflächen bleiben, wenn der Schwenkhebel nicht betätigt wird, also in seiner ruhenden Ausgangsstellung steht. Der Schwenkhebel kann aus seiner ruhenden Ausgangsstellung heraus in beide Drehrichtungen verschwenkt werden, wobei ein Verschwenken in eine der beiden Drehrichtungen als Arbeitshub bezeichnet wird und wobei ein Verschwenken des Hebels zurück in seine Ausgangslage als Leerhub bezeichnet wird. Bei der bekannten Stelleinrichtung führt ein im Uhrzeigersinn durchgeführter Arbeitshub dazu, daß die jeweils an der rechten Seite der gestellfesten Anschläge angeordneten Klemmrollen in ihre Klemmspalte hineingezogen werden, so daß das Innenteil gemeinsam mit dem Schwenkhebel verschwenkt werden kann. Unter dieser Schwenkbewegung nähern sich die eingeklemmten Klemmrollen den anderen, zur linken Seite der gestellfesten Anschläge angeordneten Klemmrollen. Dieser Bewegungsablauf ist darauf zurückzuführen, daß die zur linken Seite angeordneten Klemmrollen an den gestellfesten Anschlägen abgestützt und außer Klemmeingriff mit den Klemmflächen gehalten sind. Der Schwenkhebel und das Innenteil werden also während des Arbeitshubes gemeinsam an den gestellfest abgestützten Klemmrollen vorbeigeschwenkt. Wird der Schwenkhebel losgelassen, so rutschen oder rollen die zuvor eingeklemmten Klemmrollen aufgrund der geänderten Drehrichtung des Schwenkhebels aus dem Klemmeingriff heraus. Die anderen Klemmrollen sind noch nicht in Klemmeingriff, da die zugeordneten, an dem Schwenkhebel vorgesehenen Klemmrampen beabstandet von diesen Klemmrollen sind. Unter diesem Leerhub findet also keine Drehbewegung des Innenteils statt. Ein wiederholtes Auslenken des Schwenkhebels aus seiner Ausgangsstellung heraus im Uhrzeigersinn bewirkt also eine weitere Drehung der Abtriebswelle im Uhrzeigersinn.

Das Innenteil ist mit Mitnehmern versehen (Figur 13 der EP 0 631 901 B1), die jeweils zwischen zwei umfangsseitig einander benachbarten Klemmrollen des schaltbaren Klemmrollengesperres eingreifen. Die Klemmrollen sind in einem von einem feststehenden Gehäuse und einer Abtriebswelle begrenzten Ringraum angeordnet, wobei die zylindrische Innenwand des Gehäuses und die Klemmrampen der Abtriebswelle keilförmige Klemmspalten für die Klemmrollen begrenzen. Die Klemmrollen werden mittels Druckfedern in ihre Klemmspalte hineingefedert, um eine ständige Klemmbereitschaft zu gewährleisten. Eine Drehung der Mitnehmer im Uhrzeigersinn führt dazu, daß die einen Klemmrollen aus den zugeordneten Klemmspalten herausgedrückt werden, so daß eine Drehung der Abtriebswelle des schaltbaren Klemmrollengesperres erfolgen kann. Die über die Mitnehmer übertragene Antriebsleistung wird über die Klemmrollen in die Abtriebswelle des schaltbaren Klemmrollengesperres eingeleitet. Die Drehung der Abtriebswelle dient der Sitzverstellung.

Bei der beschriebenen Stellvorrichtung muß sichergestellt sein, daß das Innenteil des Klemmrollenschaltwerks einwandfrei gelagert ist, da dieses Innenteil wesentlich ist für die Funktion des Klemmrollenschaltwerks und für die Funktion des schaltbaren Klemmrollengesperres. Ist dieses Innenteil nicht einwandfrei gelagert, ist beispielsweise ein Verkippen des Innenteils denkbar, so daß auf der Seite des Klemmrollenschaltwerks die keilförmigen Klemmspalte verändert werden und auf der Seite des schaltbaren Klemmrollengesperres der Angriffspunkt der Mitnehmer an den Klemmrollen verändert wird. Beides ist nachteilig, da die Funktionen dieser Maschinenelemente gestört sein können bzw. die komplette Stellvorrichtung ausfallen kann. Dem genannten Stand der Technik ist keine Lösung zu entnehmen, mit der sichergestellt ist, daß das Innenteil des Klemmrollenschaltwerks einwandfrei im Hinblick auf die Funktion des Klemmrollenschaltwerks des schaltbaren Klemmrollengesperres gelagert ist.

### Zusammenfassung der Erfindung

Aufgabe der vorliegenden Erfindung ist es daher, eine Stelleinrichtung zur Durchführung einer Verstellfunktion anzugeben, bei der sichergestellt ist, daß das Abtriebselement des Klemmrollenschaltwerks einwandfrei gelagert ist. Bei der erfindungsgemäßen Stelleinrichtung ist für das Klemmrollenschaltwerk und für das schaltbare Klemmrollengesperre ein gemeinsames Gehäuse vorgesehen, wobei das Abtriebselement des Klemmrollenschaltwerks über ein Radiallager an dem Gehäuse radial gelagert ist, und wobei die Abtriebswelle des schaltbaren Klemmrollengesperres über ein weiteres Radiallager an dem Gehäuse radial gelagert ist.

Diese Aufgabe wird mit den Merkmalen des Anspruchs 1 gelöst.

In anderen Worten läßt sich die Erfindung auch dadurch beschreiben, daß das Abtriebselement des Klemmrollenschaltwerks und die Abtriebswelle des Klemmrollengesperres beide an dem gemeinsamen Gehäuse zentriert sind. Das heißt, daß das Abtriebselement des Klemmrollenschaltwerks und die Abtriebswelle des Klemmrollengesperres einwandfrei zueinander zentriert sind. Die Radiallager dienen also vornehmlich dem Zweck einer einwandfreien Zentrierung. Demzufolge können die Gleitlagerflächen der Radiallager auch als Zentrierflächen bezeichnet werden, die für einen Gleitkontakt geeignet sind. Als Zentrierfläche kann auch eine Mantelfläche eines zylindrischen Stifts aufgefaßt werden, der lediglich in einer Linienberührung mit einer anderen Fläche in Kontakt steht.

Das Radiallager des Abtriebselementes des Klemmrollenschaltwerks kann so gestaltet sein, daß das Abtriebselement nicht kippen kann. Auf diese Weise ist sichergestellt, daß das Abtriebselement des Klemmrollenschaltwerks einwandfrei positioniert und radial gelagert ist. Weil die mit den Klemmrampen versehene Abtriebswelle des Klemmrollengesperres ebenfalls am Gehäuse gelagert ist und weil die Klemmrollen gegen diese Klemmrampen angefedert sind, ist einwandfrei gewährleistet, daß das Abtriebselement des Klemmrollenschaltwerks mit den vorzugsweise daran vorgesehenen Klauen einwandfrei zu den Klemmrollen des Klemmrollengesperres positioniert ist; denn die Abstützung und Zentrierung sowohl für das Abtriebselement des Klemmrollenschaltwerks als auch für die Abtriebswelle des Klemmrollengesperres erfolgt an einem gemeinsamen Gehäuse. Die Stützflächen bzw. die Lagerflächen können an dem Gehäuse problemlos in einer vorgesehenen Lage zueinander ausgebildet werden. Das Gehäuse kann vollkommen geschlossen sein, wobei lediglich ein Eingang zum Anschließen des Schwenkhebels und ein Ausgang für die Abtriebswelle des Klemmrollengesperres vorzusehen ist. Das Gehäuse schützt das Klemmrollenschaltwerk und das Klemmrollengesperre vor Eindringen von unerwünschten Fremdstoffen, die die Funktion dieser Maschinenelemente beeinträchtigen könnte. Das Gehäuse kann von außen ein topfförmiges Aussehen haben, wobei alle scharfkantigen Teile innerhalb des Gehäuses verborgen sind. Auf diese Weise ist auch ein Verletzungsrisiko beispielsweise beim Abrutschen vom Schwenkhebel reduziert.

Die genannten Klemmrollen umfassen selbstverständlich auch Klemmkegel. Die Radiallager können sowohl als Gleitlagerung als auch als Wälzlagerung ausgeführt sein.

Vorzugsweise weist das Abtriebselement des Klemmrollenschaltwerks einen - vorzugsweise um die Drehachse seines Radiallagers drehbar angeordnetenk Kupplungsring auf, der an dem Gehäuse radial gelagert ist, und der gemeinsam mit Klemmrampen des Antriebselementes keilförmige Klemmspalten begrenzt, in denen die Klemmrollen angeordnet sind. Der Kupplungsring kann beispielsweise einen hohlzylindrischen Ansatz aufweisen, dessen äußere Mantelfäche mit einer zylindrischen Innenwand des Gehäuses in Gleitkontakt steht, und dessen innere Mantelfläche eine zylindrische Klemmbahn für die Klemmrollen bildet.

Vorzugsweise ist der Kupplungsring mit Klauen versehen, die zum Freischalten der Klemmrollen des Klemmrollengesperres und zur formschlüssigen Mitnahme der Abtriebswelle des Klemmrollengesperres vorgesehen sind. Die Klauen stehen also in Richtung auf das Klemmrollengesperre vor und können zwischen die Klemmrollen des Klemmrollengesperres eingreifen. Bei dieser Anordnung sind der Kupplungsring des Klemmrollenschaltwerks und die Abtriebswelle des Klemmrollengesperres koaxial angeordnet. Zur Leistungsübertragung vom Klemmrollenschaltwerk auf das Klemmrollengesperre schieben die Klauen des Kupplungsrings zunächst die Klemmrollen des Klemmrollengesperres aus dem Klemmeingriff mit den Klemmflächen heraus und danach schlagen die Klauen an der Abtriebswelle des Klemmrollengesperres an und nehmen diese formschlüssig mit. Anders als im beschriebenen Stand der Technik wird hier die Leistung also direkt von dem Kupplungsring des Klemmrollenschaltwerks auf die Abtriebswelle des Klemmrollengesperres übertragen, und zwar ohne daß die Leistung über die Klemmrollen des Klemmrollengesperres übertragen wird.

Die Klemmrollen des Klemmrollengesperres sind üblicherweise gegen eine zylindrische Klemmbahn angefedert. Diese zylindrische Klemmbahn kann zugleich eine Gleitlagerfläche für den Kupplungsring des Klemmrollenschaltwerks sein. Dies ist dann gewährleistet, wenn die Klauen mit ihrer Mantelfläche an der zylindrischen Klemmbahn anliegen; diese Mantelfläche bildet zusammen mit der zylindrischen Klemmbahn ein Radiallager. Dieses Radialtager kann das weiter oben beschriebene Radiallager zwischen Kupplungsring und Gehäuse ersetzten oder auch ergänzen.

Eine erfindungsgemäße Weiterbildung sieht vor, daß das Antriebselement des Klemmrollenschaltwerks eine drehfest mit dem Schwenkhebel verbundene Schaltscheibe aufweist, und bei der das Antriebselement zwei - vorzugsweise um die Drehachse des Radiallagers - in entgegengesetzten Richtungen schwenkbar angeordnete Antriebsteile aufweist, wobei die Schaltscheibe in der einen Richtung formschlüssig das eine Antriebsteil und in der entgegengesetzten Richtung formschlüssig das andere Antriebsteil mitnimmt. Wird der Schwenkhebel aus seiner neutralen Ausgangsstellung heraus in eine Richtung ausgelenkt, so wird in der gewählten Richtung jeweils eines der beiden Antriebsteile formschlüssig mitgenommen, während das jeweils andere Antriebsteil gestellfest abgestützt bleibt.

Vorzugsweise weisen die beiden Antriebsteile des Klemmrollenschaltwerks jeweils Klemmrampen für die Klemmrollen auf, wobei die beiden Antriebsteile jeweils über ein Radiallager an dem Kupplungsring radial gelagert sind. Wenn der Kupplungsring eine zylindrische Klemmbahn für die Klemmrollen aufweist, dann begrenzen diese zylindrische Klemmbahn zusammen mit den Klemmrampen der Antriebsteile keilförmige Klemmspalten für die Klemmrollen; da außerdem die Antriebsteile an dem Kupplungsring radial gelagert und zentriert sind, können diese keilförmigen Klemmspalte sehr genau festgelegt werden. Vorzugsweise bildet eine Innenwand des Kupplungsrings eine zylindrische Klemmbahn für die Klemmrollen und außerdem eine Gleitlagerfläche für das Radiallager.

Wenn die beiden Antriebsteile des Klemmrollenschaltwerks jeweils mit mehreren über den Umfang verteilt angeordneten Klemmrampen versehen sind, die gemeinsam mit der zylindrischen Klemmbahn des Kupplungsrings keilförmige Klemmspalten begrenzen, in denen die Klemmrollen angeordnet sind, ist es besonders zweckmäßig, daß sich die von den Klemmrampen des einen Antriebsteiles begrenzten Klemmspalten in der einen Umfangsrichtung verjüngen und die von den Klemmrampen des anderen Antriebsteiles begrenzten Klemmspalten sich in der entgegengesetzten Umfangsrichtung verjüngen. Bei dieser Anordnung wird in einer gewählten Drehrichtung des Schwenkhebels jeweils nur eines der beiden Antriebsteile aufgrund eines Klemmeingriffs der Klemmrollen mitgenommen.

### Kurze Beschreibung der Zeichnungen

Nachstehend wird die Erfindung anhand von zwei in insgesamt sieben Figuren dargestellten Ausführungsbeispielen näher erläutert. Es zeigen:
- Figur 1: einen Längsschnitt durch eine erfindungsgemäße Stelleinrichtung,
- Figur 2: einen Querschnitt durch die Stelleinrichtung aus Figur 1 entlang der Linie II-II,
- Figur 3: ein Antriebsteil in einer Ansicht,
- Figur 4: einen weiteren Querschnitt durch die erfindungsgemäße Stelleinrichtung aus Figur 1 entlang der Linie IV-IV,
- Figur 5: einen Querschnitt durch eine weitere erfindungsgemäße Stelleinrichtung,
- Figur 6: die Stelleinrichtung aus Figur 5, jedoch mit dem Schwenkhebel in Ausgangsstellung und
- Figur 7: die erfindungsgemäße Stelleinrichtung in der Darstellung gemäß Figur 6, jedoch mit ausgelenktem Schwenkhebel.

### Ausführliche Beschreibung der Zeichnungen

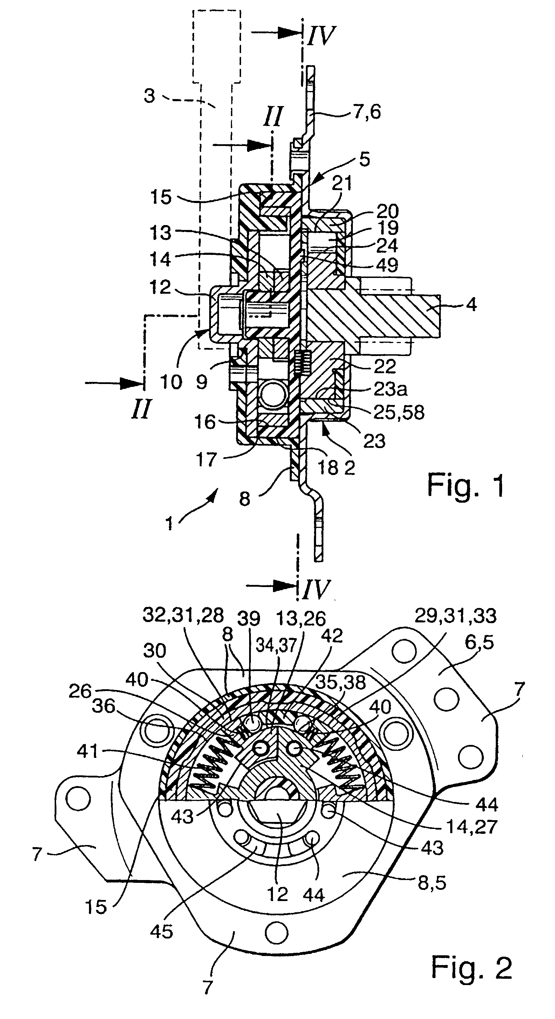

Figur 1 zeigt eine erfindungsgemäße Stelleinrichtung zur Verstellung eines Sitzes eines Kraftfahrzeugs. Ein Klemmrollenschaltwerk 1 und ein schaltbares Klemmrollengesperre 2 sind derart miteinander gekoppelt, daß eine von einem Schwenkhebel 3 durchgeführte Schwenkbewegung über das Klemmrollenschaltwerk 1 auf eine Abtriebswelle 4 des schaltbaren Klemmrollengesperres 2 übertragen wird. Das Klemmrollenschaltwerk 1 und das schaltbare Klemmrollengesperre 2 sind in einem gemeinsamen Gehäuse 5 angeordnet. Das Gehäuse 5 besteht im wesentlichen aus einem Gehäuseboden 6 mit Anschraubflanschen 7 und aus einem Gehäusedeckel 8, der im vorliegenden Ausführungsbeispiel aus Kunststoff gebildet ist. Der Gehäusedeckel 8 ist mit einer Öffnung 9 für ein Antriebselement 10 des Klemmrollenschaltwerks 1 versehen. Der Gehäuseboden 6 ist mit einer weiteren Öffnung 11 für die Abtriebswelle 4 des schaltbaren Klemmrollengesperres 2 versehen.

Das Antriebselement 10 umfaßt eine Schaltscheibe 12, die drehfest mit dem Schwenkhebel 3 verbunden ist. Weiterhin umfaßt das Antriebselement 10 zwei Antriebsteile 13, 14, die mit der Schaltscheibe 12 zur Durchführung einer Schwenkbewegung verbunden sind. Weiterhin ist das Antriebselement 10 mit einem Kupplungsring 15 versehen, der das Klemmrollenschaltwerk 1 und das schaltbare Klemmrollengesperre 2 zur Übertragung einer Schwenkbewegung miteinander verbindet. Eine zylindrische Innenwand des Gehäusedeckels 8 und eine zylindrische Mantelfläche des Kupplungsrings 15 sind als Gleitlagerflächen 16, 17 ausgebildet, die miteinander in Gleitkontakt stehen. Auf diese Weise ist ein Radiallager 18 gebildet, wobei das Kupplungsteil 15 radial an dem Gehäuse 5 gelagert ist und wobei das Radiallager 18 ein Kippen des Kupplungsteils 15 verhindert. Die Drehachse des Radiallagers 18 fällt zusammen mit der Drehachse der beiden Antriebsteile 13, 14, der Schaltscheibe 12, des Schwenkhebels 3 und auch der Abtriebswelle 4 des schaltbaren Klemmrollengesperres 2.

Zwischen der Abtriebswelle 4 des Klemmrollengesperres 2 und dem Gehäuse 5 sind Klemmrollen 19 angeordnet. Ein Klemmring 20 ist drehfest mit dem Gehäuse 5 verbunden, wobei dessen innere Mantelfläche eine zylindrische Klemmbahn 21 für die Klemmrollen 19 bildet. Die Abtriebswelle 4 ist mit mehreren über den Umfang verteilt angeordneten Nocken 22 versehen, deren Umfangsflächen als Gleitlagerflächen 23 ausgebildet sind, wobei diese Gleitlagerflächen 23 auf der als Gleitlagerfläche 23a ausgebildeten inneren Mantelfläche des Klemmrings 20 gleiten. Weiterhin ist die Abtriebswelle 4 mit mehreren über den Umfang verteilt angeordneten Klemmrampen 24 versehen, die gemeinsam mit der zylindrischen Klemmbahn 21 des Klemmrings 20 keilförmige Klemmspalten begrenzen, in die die Klemmrollen 19 hineingefedert sind. Das von den Gleitlagerflächen 23 der Nocken 22 einerseits und der Gleitlagerfläche 23a des Klemmrings 20 andererseits gebildete Radiallager 25 sorgt dafür, daß die Abtriebswelle 4 gegenüber dem Gehäuse 5 radial gelagert ist, wobei das Radiallager 25 derart beschaffen ist, daß ein Verkippen der Abtriebswelle 4 ausgeschlossen ist. Die innere Mantelfläche des Klemmrings 20 dient sowohl als Gleitlagerfläche 21 als auch als Klemmbahn.

Figur 2 zeigt einen Querschnitt entlang des markierten Verlaufs II-II. Hier sind deutlich die beiden axial hintereinander angeordneten Antriebsteile 13, 14 zu erkennen. Jedes der beiden Antriebsteile 13, 14 weist drei gleichmäßig über den Umfang verteilt angeordnete Finger 26, 27 auf, wobei die Finger 26, 27 mit Schaltspiel in Umfangsrichtung ineinandergreifen. Die beiden Antriebsteile 13, 14 sind so weit gegeneinander drehbar, bis die ineinander greifenden Finger 26, 27 gegeneinander schlagen. Die Antriebsteile 13, 14 sind jeweils über ein Radiallager 28, 29 an dem Kupplungsring 15 radial gelagert und zentriert. Zu diesem Zweck ist ein Ring 30 drehfest mit dem Kupplungsring 15 verbunden, wobei dessen innere Mantelfläche eine Gleitlagerfläche 31 bildet. Weiterhin sind die Umfangsflächen der Finger 26, 27 jeweils mit Gleitlagerflächen 32, 33 versehen, die mit der Gleitlagerfläche 31 des Rings 30 im Gleitkontakt stehen. Einander benachbarte Finger 26, 27 der beiden Antriebsteile 13, 14 sind jeweils mit Klemmrampen 34, 35 versehen, die gemeinsam mit der als zylindrische Klemmbahn 36 ausgebildeten inneren Mantelfläche des Rings 30 keilförmige Klemmspalten 37, 38 begrenzen, in denen Klemmrollen 39 angeordnet sind. Die Klemmrollen 39 sind mittels Druckfedem 40 in ihre keilförmigen Klemmspalte 37, 38 hineingefedert. Die Druckfedern 40 sind einerseits an den Fingern 26, 27 und andererseits an den Klemmrollen 40 abgestützt. Weitere Druckfedern 41 sind zwischen einander benachbarten Fingern 26, 27 der beiden Antriebsteile 13, 14 angeordnet. Jede Druckfeder 41 ist einerseits an dem einen Finger 26 und andererseits an dem anderen Finger 27 abgestützt.

Zwischen zwei einander benachbarten Klemmrollen 39 greifen fest mit dem Gehäusedeckel 8 verbundene Zungen 42 ein, an denen die Klemmrollen 39 abgestützt sind. Die Zungen 42 sind derart bemessen, daß in der gezeigten Darstellung die Klemmrollen 39 außer Klemmeingriff mit dem Klemmrampen 34, 35 und der zylindrischen Klemmbahn 36 sind. Die Zungen 42 bilden gestellfeste erste Anschläge.

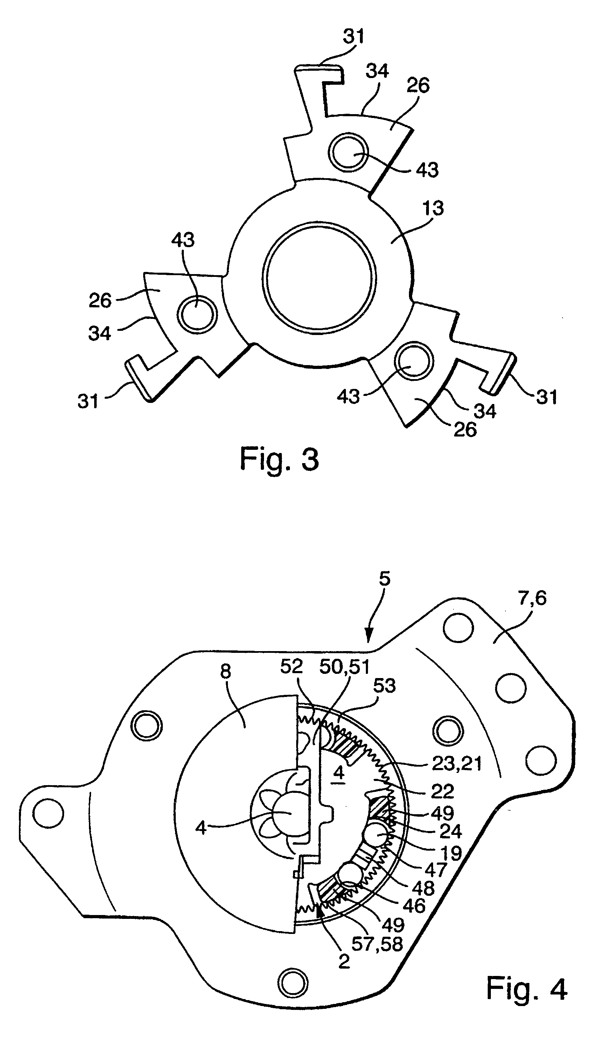

Jedes der beiden Antriebsteile 13, 14 ist fest mit Stiften 43, 44 verbunden, die stirnseitig vorstehen und die in Langlöcher 45 des Gehäusedeckels 8 eingreifen. Außerdem greifen diese Stifte 43, 44 in Langlöcher der Schaltscheibe 12 ein, wie weiter unten näher erläutert wird. Figur 3 zeigt das Antriebsteil 13 als Einzelheit.

Figur 4 zeigt einen Halbschnitt entlang der Linie III-III aus Figur 1. Hier ist deutlich das schaltbare Klemmrollengesperre 2 zu erkennen. Die Klemmrollen 19 sind in ihre von den Klemmrampen 24 und der zylindrischen Klemmbahn 21 begrenzten keilförmigen Klemmspalte 46, 47 mittels Druckfedern 48 hineingefedert. Fest mit dem Kupplungsring 15 verbundene Klauen 49 greifen zwischen die Klemmrollen 19 ein.

Weiterhin ist eine Rutschsicherung 50 vorgesehen, die einen drehfest, aber radial beweglich mit der Abtriebswelle 4 verbundenen Schieber 51 aufweist, dessen Zähne 52 mit einem Zahnkranz 53 des Gehäuses 5 in Eingriff gebracht werden können.

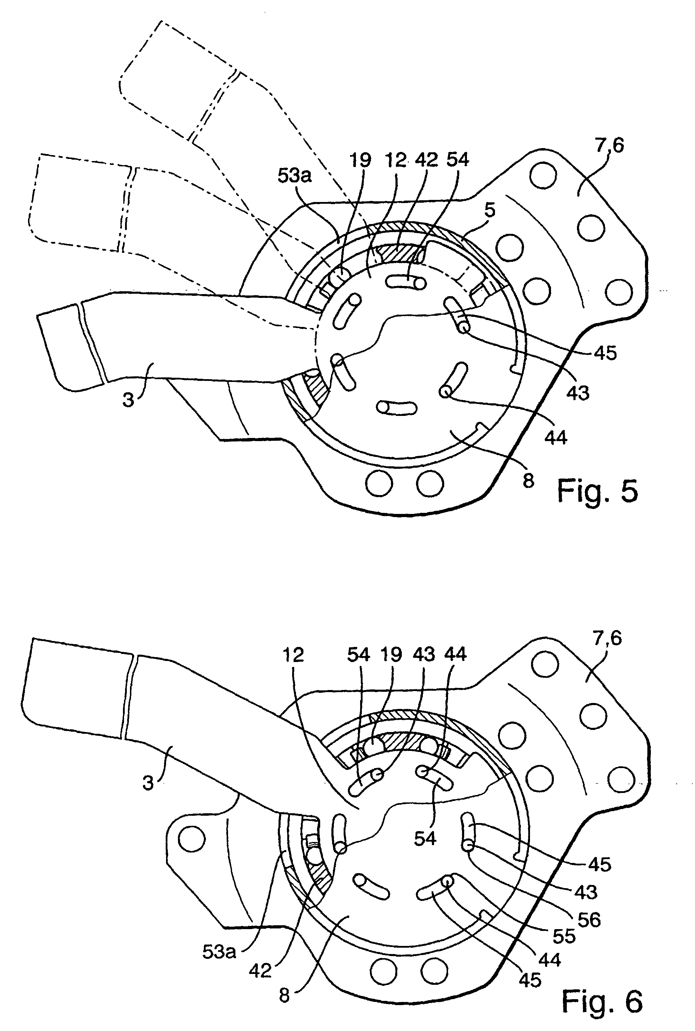

Figur 5 zeigt eine weitere erfindungsgemäße Stelleinrichtung, die sich von der oben beschriebenen Stelleinrichtung im wesentlichen dadurch unterscheidet, daß der Schwenkhebel 3 einstückig mit der Schaltscheibe 12 verbunden ist, wobei der Schwenkhebel 3 durch einen Schlitz 53a des Gehäuses 5 radial hindurchgeführt ist. Der Gehäusedeckel 8 ist teilweise aufgebrochen, so daß die Schaltscheibe 12 mit den Langlöchern 54 deutlich zu erkennen ist. In dieser Darstellung sind deutlich die in der Schaltscheibe 12 vorgesehenen Langlöcher 54 dargestellt, in die die Stifte 43, 44 eingreifen.

In dieser Figur 5 sind drei Positionen des Schwenkhebels 3 dargestellt. Gestrichelt dargestellt ist die mittlere, die Ausgangsposition des Schwenkhebels 3. Von dort aus kann der Schwenkhebel 3 im Uhrzeigersinn und entgegen dem Uhrzeigersinn ausgelenkt werden. Ein Auslenken des Schwenkhebels 3 aus der Ausgangsstellung bewirkt einen Arbeitshub und eine Rückstellbewegung in die Ausgangsstellung bewirkt einen Leerhub. Während des Arbeitshubes wird die über die Betätigung des Schwenkhebels 3 aufgebrachte Leistung in die Abtriebswelle 4 des Klemmrollengesperres 2 weitergeleitet.

Im folgenden soll erläutert werden, auf welche Weise diese Leistungsübertragung erfolgt. Zur Erläuterung werden die Figuren 2, 5, 6 und 7 herangezogen. Figur 6 zeigt die erfindungsgemäße Sitzverstellung aus Figur 5, jedoch mit dem Schwenkhebel 3 in seiner Ausgangsstellung. Unter der Wirkung der weiter oben beschriebenen Druckfedern 41 werden die Stifte 43, 44 der beiden Antriebsteile 13, 14 gegen gestellfeste Anschläge angefedert. Die Stifte 44 werden entgegen dem Uhrzeigersinn gegen das Ende der Langlöcher 45 angefedert, so daß dieses Ende einen zweiten gestellfesten Anschlag 55 bildet. Die Stifte 43 des Antriebsteiles 13 sind im Uhrzeigersinn gegen die anderen Enden der Langlöcher 45 angefedert, so daß diese Enden dritte gestellfeste Anschläge 56 bilden. In jedes Langloch 45 greift entweder ein Stift 43 des Antriebsteiles 13 oder ein Stift 44 des Antriebsteiles 14 ein.

Die in der Schaltscheibe 12 vorgesehenen Langlöcher 54 sind so bemessen, daß in der Ausgangsstellung des Schwenkhebels 3 die Stifte 43, 44 ebenfalls an Enden der Langlöcher 54 anliegen. Auf diese Weise ist die Ausgangsstellung des Schwenkhebels 3 eindeutig festgelegt. Die Langlöcher 45, 54 der Schaltscheibe 12 und des Gehäusedeckels 8 liegen hier deckungsgleich übereinander.

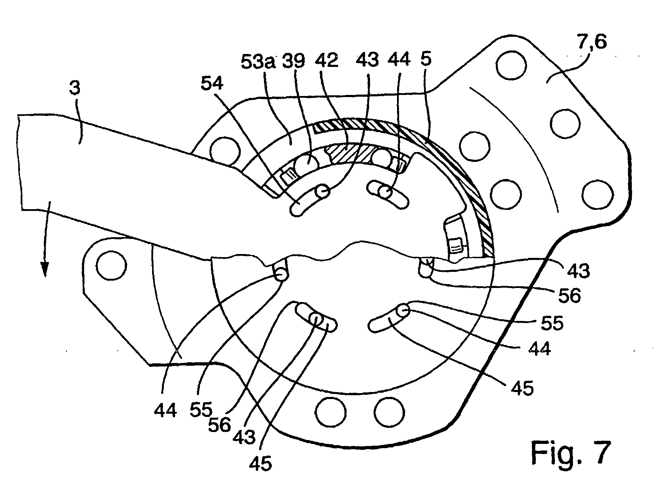

Figur 7 zeigt die Stelleinrichtung aus Figur 6, jedoch ist der Schwenkhebel 3 aus seiner Ausgangsstellung heraus entgegen dem Uhrzeigersinn ausgelenkt worden, wobei das Ende dieses Arbeitshubes noch nicht erreicht ist. Der Figur ist deutlich zu entnehmen, daß der Schwenkhebel 3 die Stifte 43 formschlüssig mitnimmt, da diese jeweils an dem Ende des Langlochs 54 der Schaltscheibe 12 anliegen. Das bedeutet, daß das Antriebsteil 13 ebenfalls formschlüssig mitgenommen wird. Da nun eine Relativbewegung zwischen dem Antriebsteil 13 und dem Kupplungsring 15 stattfindet, werden die Klemmrollen 39 des Klemmrollenschaltwerks 1 in ihre keilförmigen Klemmspalte 37 hineingezogen. Aus diesem Grund schwenkt also der Kupplungsring 15 gemeinsam mit dem Antriebsteil 13 und dem Schwenkhebel 3. Unter der Drehung des Kupplungsrings 15 schlagen dessen Klauen 49 zunächst gegen die Klemmrollen 19 des schaltbaren Klemmrollengesperres 2 und bringen die betreffenden Klemmrollen 19 außer Klemmeingriff. Im Anschluß daran schlagen die Klauen 49 an nicht weiter dargestellte Anschläge der Abtriebswelle 4, so daß die Abtriebswelle 4 formschlüssig mitgedreht wird.

Während dieses Arbeitshubes bleiben die Stifte 44 bzw. das Antriebsteil 14 gestellfest an den zweiten Anschlägen 55 abgestützt. Unter diesem Arbeitshub werden die Druckfedem 41 komprimiert, da das Antriebsteil 13 gegenüber dem gestellfest abgestützten Antriebsteil 14 verschwenkt wird. Das Ende des Arbeitshubes (Figur 7) ist erreicht, wenn die Finger 27 des Antriebsteiles 13 gegen die Finger 27 des Antriebsteiles 14 anschlagen. Am Ende des Arbeitshubes sind die Druckfedern 41 noch nicht auf Block zusammengedrückt.

Während des Arbeitshubes bleiben die dem gestellfest abgestützten Antriebsteil 14 zugeordneten Klemmrollen 39 in ihren keilförmigen Klemmspalten 38 und sind einerseits an den gestellfesten Zungen 42 und andererseits an den Druckfedern 40 abgestützt. Die gestellfesten Zungen 42 sind so bemessen, daß die Klemmrollen 39 außer Klemmeingriff bleiben.

Wird der Schwenkhebel 3 nun losgelassen, federt dieser unter Federkraft der komprimierten Druckfedem 41 zurück in seine Ausgangsstellung. Die Druckfedern 41 entspannen soweit, bis die Stifte 43 des Antriebsteils 13 wieder an ihren gestellfesten dritten Anschlägen 56 anschlagen. Unter diesem Leerhub findet keine Drehbewegung des Kupplungsrings 15 statt. Denn die zuvor eingeklemmten Klemmrollen 39 werden aufgrund der Relativbewegung zwischen dem Antriebsteil 13 und dem Kupplungsring 15 in ihre keilförmigen Klemmspalte 37 hineingedrückt, so daß ein Klemmeingriff unmöglich ist. Ein erneutes Auslenken des Schwenkhebels- 3 entgegengesetzt dem Uhrzeigersinn bewirkt ein weiteres Verdrehen des Kupplungsrings 15 und damit der Abtriebswelle 4. Für die Funktion der erfindungsgemäßen Stelleinrichtung ist es nicht erforderlich, den Arbeitshub vollständig auszuführen. Beispielsweise kann der Schwenkhebel 3 nur um die Hälfte seines möglichen Arbeitshubes ausgelenkt werden. Dementsprechend reduziert findet eine Mitnahme des Kupplungsrings 15 und der Abtriebswelle 4 statt. Wird aus dieser Zwischenstellung der Schwenkhebel 3 losgelassen, federt dieser wiederum unter der Federkraft der Druckfedern 41 zurück in seine Ausgangsstellung.

Ein Drehen der Abtriebswelle 4 in die entgegengesetzte Richtung ist möglich, wenn der Schwenkhebel 3 aus seiner Ausgangsstellung im Uhrzeigersinn betätigt wird. Die Leitungsübertragung erfolgt in der gleichen zuvor beschriebenen Weise.

In der Ausgangsstellung des Schwenkhebels 3 wird ein von außen in die Abtriebswelle 4 eingeleitetes Drehmoment über die jeweils eingeklemmten Klemmrollen 19 in das Gehäuse 5 eingeleitet.

Um zu vermeiden, daß die eingeklemmten Klemmrollen 19 des Klemmrollengesperres 2 unter dem Einfluß von Vibrationen kurzzeitig den Klemmeingriff lokkern und somit eine Relativdrehung zwischen dem Gehäuse 5 und der Abtriebswelle 4 auslösen könnten, ist die oben bereits erwähnte Rutschsicherung 50 vorgesehen. Wenn der Schwenkhebel 3 in seiner Ausgangsposition ist, greifen die Zähne 52 des Schiebers 51 in den Zahnkranz 53 ein. Somit besteht eine formschlüssige Verbindung zwischen der Abtriebswelle 4 und dem Gehäuse 5. Wird der Schwenkhebel 3 betätigt, wird der Schieber 51 über einen Schaltmechanismus radial einwärts bewegt, so daß die Zähne 52 außer Eingriff mit dem Zahnkranz 53 sind.

Die beschriebenen Radiallager dienen auch der Zentrierung der gelagerten Teile zueinander. Die Stifte 43, 44 und die Langlöcher 54 der Schaltscheibe 12 können derart aufeinander abgestimmt sein, daß die Schaltscheibe 12 über die Stifte 43, 44 einwandfrei zentriert ist.

Die Klauen 49 des Kupplungsringes 15 liegen mit ihren äußeren Mantelflächen an der gehäusefesten zylindrischen Klemmbahn 21 des Klemmrollengesperre 2 an (Figur 4); auf diese Weise ist sichergestellt, daß die Klauen 49 einwandfrei zentriert sind und somit einwandfrei zu den Klemmrollen ausgerichtet sind. Da die Mantelflächen der Klauen 49 an der zylindrischen Klemmbahn 21 entlanggleiten, bilden diese Mantelflächen Gleitlagerflächen 57, die zusammen mit der zylindrischen Klemmbahn 21 ein Radiallager 58 bilden.

### Bezugszahlenliste

- 1: Klemmrollenschaltwerk
- 2: schaltbares Klemmrollengesperre
- 3: Schwenkhebel
- 4: Abtriebswelle
- 5: Gehäuse
- 6: Gehäuseboden
- 7: Anschraubflansch
- 8: Gehäusedeckel
- 9: Öffnung
- 10: Antriebselement
- 11: Öffnung
- 12: Schaltscheibe
- 13: Antriebsteil
- 14: Antriebsteil
- 15: Kupplungsring
- 16: Gleitlagerfläche
- 17: Gleitlagerfläche
- 18: Radiallager
- 19: Klemmrolle
- 20: Klemmring
- 21: zylindrische Klemmbahn
- 22: Nocke
- 23: Gleitlagerfläche
- 23a: Gleitlagerfläche
- 24: Klemmrampe
- 25: Radiallager
- 26: Finger
- 27: Finger
- 28: Radiallager
- 29: Radiallager
- 30: Ring
- 31: Gleitlagerfläche
- 32: Gleitlagerfläche
- 33: Gleitlagerfläche
- 34: Klemmrampe
- 35: Klemmrampe
- 36: zylindrische Klemmbahn
- 37: Klemmspalt
- 38: Klemmspalt
- 39: Klemmrolle
- 40: Druckfeder
- 41: Druckfeder
- 42: Zunge
- 43: Stift
- 44: Stift
- 45: Langloch
- 46: Klemmspalt
- 47: Klemmspalt
- 48: Druckfeder
- 49: Klaue
- 50: Rutschsicherung
- 51: Schieber
- 52: Zahn
- 53: Zahnkranz
- 53a: Schlitz
- 54: Langloch
- 55: zweiter Anschlag
- 56: dritter Anschlag
- 57: Gleitlagerfläche
- 58: Radiallager

## Patentansprüche

1. Stelleinrichtung zur Durchführung einer Verstellfunktion, insbesondere zur Verstellung eines Sitzes eines Kraftfahrzeugs, mit einem Gehäuse (5), und mit einem Schwenkhebel (3), dessen eines Ende an einem innerhalb des Gehäuses angeordneten Klemmkörperschaltwerk (1) angreift, zwischen dessen von dem Schwenkhebel (3) schwenkbaren Antriebselement (10) und dessen Abtriebselement (15) erste Klemmrollen oder-kugeln (39) zur Mitnahme des Abtriebselementes (15) einklemmbar sind, und mit einem schaltbaren Klemmkörpergesperre (2), dessen Abtriebswelle (4) mit dem Abtriebselement (15) des Klemmkörperschaltwerks (1) zur Übertragung einer Drehbewegung von dem Klemmkörperschaltwerk (1) auf das Klemmkörpergesperre (2) kuppelbar ist, wobei zwischen der Abtriebswelle (4) des Klemmkörpergesperres (2) und dem Gehäuse (5) zweite Klemmrollen oder-kugeln (19) einklemmbar sind, **dadurch gekennzeichnet, daß** das Abtriebselement (15) über ein Radiallager (18) an dem Gehäuse (5) radial gelagert ist, daß des Klemmkörpergesperre (2) innerhalb des Gehäuses (5 angeordnet ist, und daß die Abtriebswelle (4) des Klemmkörpergesperres (2) über ein weiteres Radiallager (25) an dem Gehäuse (5) radial gelagert ist.

2. Stelleinrichtung nach Anspruch 1, wobei das Klemmkörperschaltwerk ein Klemmrollenschaltwerk ist, und bei der das Abtriebselement des Klemmrollenschaltwerks (1) einen Kupplungsring (15) aufweist, der an dem Gehäuse (5) radial gelagert ist, und der gemeinsam mit Klemmrampen (34, 35) des Antriebselementes (10) keilförmige Klemmspalten (37, 38) begrenzt, in denen die ersten Klemmrollen (39) angeordnet sind.

3. Stelleinrichtung nach Anspruch 2, bei der der Kupplungsring (15) mit Klauen (49) versehen ist, die zum Freischalten der zweiten Klemmrollen (19) des Klemmrollengesperres (2) und zur formschlüssigen Mitnahme der Abtriebswelle (4) des Klemmrollengesperres (2) vorgesehen sind.

4. Stelleinrichtung nach Anspruch 1, wobei das Klemmkörpershaltwerk ein Klemmrollenschaltwerk (1) ist, und bei der das Antriebselement (10) des Klemmrollenschaltwerks (1) eine drehfest mit dem Schwenkhebel (3) verbundene Schaltscheibe (12) aufweist, welches Antriebselement (10) zwei in entgegengesetzten Richtungen schwenkbar angeordnete Antriebsteile (13, 14) aufweist, wobei die Schaltscheibe (12) in der einen Richtung formschlüssig das eine Antriebsteil (13) und in der entgegengesetzten Richtung formschlüssig das andere Antriebsteil (14) mitnimmt.

5. Stelleinrichtung nach Anspruch 4, bei der die beiden Antriebsteile (13, 14) jeweils Klemmrampen (34, 35) für die ersten Klemmrollen (39) aufweisen und jeweils über ein Radiallager (28, 29) an dem Kupplungsring (15) radial gelagert sind.

6. Stelleinrichtung nach Anspruch 5, bei der eine Innenwand des Kupplungsrings (15) eine zylindrische Klemmbahn (36) für die ersten Klemmrollen (39) und eine Gleitlagerfläche (31) für das Radiallager (28, 29) bildet.

7. Stelleinrichtung nach Anspruch 4, bei der beide Antriebsteile (13, 14) des Klemmrotlenschaltwerks (1) jeweils mit mehreren über den Umfang verteilt angeordneten Klemmrampen (34, 35) versehen sind, die gemeinsam mit der zylindrischen Klemmbahn (36) des Kupplungsrings (15) keilförmige Klemmspalten (37, 38) begrenzen, in denen die ersten Klemmrollen (39) angeordnet sind, wobei sich die von den Klemmrampen (34, 35) des einen Antriebsteiles (13, 14) begrenzten Klemmspalten (37, 38) in der einen Umfangsrichtung verjüngen und die von den Klemmrampen (34, 35) des anderen Antriebsteiles (13, 14) begrenzten Klemmspalten (37, 38) sich in der entgegengesetzten Umfangsrichtung verjüngen.

## Claims

1. Adjusting device for carrying out an adjusting function, particularly for adjusting a seat of a motor vehicle, said device comprising a housing (5) and a pivoting lever (3) whose one end is applied to a clamping element switch gear (1) arranged within the housing, said switch gear comprising a drive element (10), which is pivotable by the pivoting lever (3), and a driven element (15), between which drive element (10) and driven element (15) first clamping rollers or balls (39) for entraining the driven element (15) can be clamped, said device further comprising a switchable clamping element locking gear (2) whose driven shaft (4) can be coupled to the driven element (15) of the clamping element switch gear (1) for transmitting a rotary motion from the clamping element switch gear (1) to the clamping element locking gear (2), and second clamping rollers or balls (19) can be clamped between the driven shaft (4) of the clamping element locking gear (2) and the housing (5), **characterised in that** the driven element (15) is mounted on the housing (5) in radial direction through a radial bearing (18), the clamping element locking gear (2) is arranged within the housing (5) and the driven shaft (4) of the clamping element locking gear (2) is mounted on the housing (5) in radial direction through a further radial bearing (25).

2. Adjusting device according to Claim 1, wherein the clamping element switch gear is a clamping roller switch gear (1) and the driven element of the clamping roller switch gear (1) comprises a coupling ring (15) which is mounted in radial direction on the housing (5) and which, together with clamping ramps (34, 35) of the drive element (10) defines wedge-shaped clamping gaps (37, 38) in which the first clamping rollers (39) are arranged.

3. Adjusting device according to Claim 2, wherein the coupling ring (15) comprises claws (49) which serve to release the second clamping rollers (19) of the clamping roller locking gear (2) and to enable a positive entrainment of the driven shaft (4) of the clamping roller locking gear (2).

4. Adjusting device according to Claim 1, wherein the clamping element switch gear is a clamping roller switch gear (1) and the drive element (10) of the clamping roller switch gear (1) comprises a switch disk (12) that is connected rotationally fast to the pivoting lever (3), said drive element (10) comprising two drive members (13, 14) that are pivotable in opposite directions, and in one of said directions the switch disk (12) positively entrains one of the drive members (13), and in an opposite direction, the switch disk (12) positively entrains the other of the drive members (14).

5. Adjusting device according to Claim 4, wherein each of the two drive members (13, 14) comprises clamping ramps (34, 35) for the first clamping rollers (39) and each drive member (3, 14) is mounted in radial direction on the coupling ring (15) through a radial bearing (28, 29).

6. Adjusting device according to Claim 5, wherein an inner wall of the coupling ring (15) defines a cylindrical clamping track (36) for the first clamping rollers (39) and a sliding bearing surface (31) for the radial bearing (28, 29).

7. Adjusting device according to Claim 4, wherein each of the two drive members (13, 14) of the clamping roller switch gear (1) comprises a plurality of circumferentially spaced clamping ramps (34, 35) that together with the cylindrical clamping track (36) of the coupling ring (15) define wedge-shaped clamping gaps (37, 38) in which the first clamping rollers (39) are arranged, the clamping gaps (37, 38) defined by the clamping ramps (34, 35) of one of the drive members (13, 14) taper in one peripheral direction and the clamping gaps (37, 38) defined by the clamping ramps (34, 35) of the other of the two drive members (13, 14) taper in the opposite peripheral direction.

## Revendications

1. Actionneur pour exécuter une fonction de réglage notamment pour régler un siège de véhicule comprenant :
- un boîtier (5) et un levier pivotant (3) dont une extrémité agit sur un mécanisme à organe de serrage (1) installé dans le boîtier, avec entre son élément d'entraînement (10) pivotant par le levier pivotant (3) et son élément de sortie (15) des premiers rouleaux ou billes de serrage (39) qui peuvent être serrés pour entraîner l'élément de sortie (15), ainsi qu'un verrou commutable (2) à organe de serrage dont l'arbre de sortie (4) peut être couplé à l'élément de sortie (15) du mécanisme (1) à organe de serrage pour transmettre un mouvement de rotation du mécanisme (1) au verrou (2), avec entre l'arbre de sortie (4) du verrou (2) et le boîtier (5) des seconds rouleaux ou billes de serrage (19) qui peuvent être serrés,
**caractérisé en ce que**
- l'élément de sortie (15) est monté radialement dans le boîtier (5) par un palier radial (18),
- le verrou (2) est installé dans le boîtier (5), et
- l'arbre de sortie (4) du verrou (2) est monté radialement dans le boîtier (5) par un autre palier radial (25).

2. Actionneur selon la revendication 1,
dans lequel
le mécanisme de commutation à organe de serrage est un mécanisme de commutation à rouleaux de serrage, et
l'élément de sortie du mécanisme de commutation à rouleaux de serrage (1) comporte un anneau d'embrayage (15) monté radialement sur le boîtier (5) et qui délimite avec des rampes de serrage (34, 35) de l'élément d'entraînement (10), des intervalles de serrage (37, 38) en forme de coins logeant les premiers rouleaux de serrage (39).

3. Actionneur selon la revendication 2,
dans lequel
l'anneau d'embrayage (15) est muni de griffes (49) prévues pour libérer les seconds rouleaux de serrage (49) du verrou (2) et pour entraîner par une liaison par la forme l'arbre de sortie (4) du verrou (2).

4. Actionneur selon la revendication 1,
dont le mécanisme de commutation à organe de serrage est un mécanisme de commutation à rouleaux de serrage (1),
dans lequel
l'élément d'entraînement (10) du mécanisme de commutation à rouleaux de serrage (1) comporte un disque de commutation (12) relié solidairement en rotation au levier de commutation (3), l'élément d'entraînement (10) ayant deux pièces d'entraînement (13, 14) montées pivotantes dans des directions opposées, le disque de commutation (12) entraîne par une liaison par la forme la première pièce d'entraînement (13) dans une direction et l'autre pièce d'entraînement (14) dans la direction opposée.

5. Actionneur selon la revendication 4,
dans lequel
les deux pièces d'entraînement (13, 14) ont chacune des rampes de serrage (34, 35) pour les premiers rouleaux de serrage (39) et sont montées radialement chaque fois par un palier radial (28, 29) sur l'anneau d'embrayage (15).

6. Actionneur selon la revendication 5,
dans lequel
une paroi intérieure de l'anneau d'embrayage (15) forme un chemin de serrage cylindrique (36) pour les premiers rouleaux de serrage (39) et une surface de palier lisse (31) pour le palier radial (28, 29).

7. Actionneur selon la revendication 4,
dans lequel
les deux pièces d'entraînement (13, 14) du mécanisme de commutation à rouleaux de serrage (1) sont munies chaque fois de plusieurs rampes de serrage (34, 35) réparties à la périphérie, et qui en commun avec le chemin de serrage cylindrique (36) de l'anneau d'embrayage (15) délimitent les intervalles de serrage (37, 38) en forme de coins recevant les premiers rouleaux de serrage (39), et
les intervalles de serrage (37, 38) délimités par les rampes de serrage (34, 35) de l'une des pièces d'entraînement (13, 14) se rétrécissent dans la direction périphérique et les intervalles de serrage (37, 38) délimités par les rampes de serrage (34, 35) de l'autre pièce d'entraînement (13, 14) se rétrécissent dans la direction périphérique, dans le sens opposé.
